# EUROPEAN PATENT APPLICATION

(11) **EP 2 674 244 A1**
(43) Date of publication of application: **18.12.2013**
(21) Application number: 12172292.0
(22) Date of filing: 15.06.2012
(51) Int. Cl.: B23Q 1/44

(54) **A computer-controlled multi-axis device**

(71) Applicant: ROYAL COLLEGE OF ART, London SW7 2EU (GB); Warren, Michael, London SW7 2EU (GB)
(72) Inventor: Warren, Michael, London, SW7 2EU (GB)
(74) Representative: Coles, Andrea Birgit

(57) **Abstract**

The present invention provides a computer-controlled multi-axis device for moving a tool 12 over a workpiece in accordance with a design held in a computer control 20. The device includes a first track 16 that lies on an X-axis and a first carriage 18 which is drivable along the track 16 in the direction shown by arrows X-X. A beam 24 is supported on the first carriage 18 at its proximal end 26. Its distal end 28 is supported on a slave wheel assembly 38. A second carriage 28 can be driven along the beam 24 in the direction of the Y-axis under the control of computer 20. The second carriage 28 supports a further beam 30 that carries a third carriage 32 on which the tool 12 is supported. The third carriage 32 can be driven along the beam 30 in the direction of the Z-axis under the control of computer 20 which also controls the operation of the tool 12.

## Description

### Technical Field

The present invention relates to a computer-controlled multi-axis device for moving a tool over a workpiece to bring the tool into contact with the workpiece and thereby work it. The tool may be a cutting, routing, reaming, surface treating tool, e.g. a polishing head, or may be any other tool that is used in Computer Numeric Controlled (CNC) machines.

### State of the Art

CNC machines are, of course, very well known and are used for a variety of tasks, such as cutting, shaping, routing, reaming or surface treating a workpiece. Such machines are generally extremely heavy and must be mounted in a fixed position on a base or bed. One widely used type of CNC machine includes a pair of parallel tracks that extend along an X-axis and a pair of carriages that move along the tracks in accordance with a computer controller. A beam is supported on, and driven by, the carriages, and defines a third track that extends along a Y-axis. A carriage is drivable along the third track and holds the tool, e.g. a reaming device, which is used to work the workpiece. A further track may be provided for moving the tool in the direction of the Z-axis. The design stored within the computer controller moves the carriages along their respective tracks in the X, Y-and Z-directions to execute the design stored.

Such machines are extremely expensive and cost upwards of $15,000. They must be carefully aligned and are often set in heavy concrete bases to maintain alignment. Furthermore, because it is necessary to have access to the machines from all sides, they take up a substantial amount of space and have a large footprint.

Also known are machine tools that have only a single X-axis track along which a carriage is driven; the carriage supports the tool, which is also movable in the direction of the X-axis and/or the Y-axis to work a workpiece, see for example US 5914876, US 2006/159540, US 5368425, US 2009/229730, WO 2008/114964 and US 5472367. However, such tool supports tend to be equally heavy, expensive and cannot be moved.

At the other end of the spectrum, kitchen fitters and shop fitters have to shape and cut materials, such as worktops with manual tools *in situ.* If a complex cutting/shaping operation is required the workpiece can be sent off for machining by the fixed bed equipment discussed above.

The cutting of leather also presents problems. It can be cut using fixed bed CNC equipment as discussed above but many leather fabricators are small companies that cannot afford such machines and/or the space to accommodate them.

The above-mentioned kitchen fitters, shop fitters and leather cutters, often need to adapt the design applied to the workpiece at the last minute and so the sending of the workpiece away for machining limits the last minute changes that are often found to be necessary.

It is an object of the present invention to provide a computer-controlled device for machining a workpiece that can be made more cheaply than existing CNC machines and can be made in such a way that it is portable so that it can be used on-site.

### Disclosure of Invention

The present invention provides computer-controlled multi-axis device, as defined in the accompanying claims, for moving a tool over a workpiece, thereby causing the tool to work the workpiece in accordance with a design held in the computer control.

Broadly expressed, the device of the present invention has, in common with existing CNC equipment, a beam extending along the Y-axis and having a carriage that can be driven backwards and forwards along the beam in the direction of the Y-axis. The beam itself can be moved along an X-axis by means of a carriage that is driven under computer control along a track aligned with the X-axis. However, in contrast to existing CNC equipment, the Y-axis beam is only driven by a carriage at one end (the proximal end) and is supported at the other end (the distal end) by a slave support that is not itself driven.

Such an arrangement does not require the exact alignment of parallel tracks to move along the X axis that existing CNC equipment requires. As a consequence, the device of the present invention is also lighter than the existing CNC machines and does not require a substantial concrete fixed bed to support it. It can therefore be readily transported and can be fixed to a table that supports the workpiece. Alternatively, if the workpiece itself includes a relatively flat surface, then it can be secured directly to the workpiece. The securing of the device of the present application can easily be performed using temporary fixing devices, such as clamps or, if a more permanent set-up is envisaged, using bolts or screws.

The tool will be supported on the carriage that is drivable along the Y-axis beam. In accordance with one embodiment, the tool can be supported by a height adjustable bracket so that it is movable along the Z-axis as well, thereby providing the ability to move the tool in the X, Y-and Z-axis to machine the workpiece. The Z-axis movement may also be under computer control. However, it may not always be necessary to have the Z-axis movement, for example if the device is used for cutting leather.

As mentioned above, the distal end of the Y-axis beam is supported by a slave support that is moved over a supporting surface, e.g. of a table or of the workpiece, by the Y-axis beam. Because the beam is supported at both ends, it has the advantage of being able to support a tool of substantial weight without having to provide heavy-duty support at the end of the Y-axis beam that is driven. However, in contrast to existing CNC machines that are supported and driven from both ends of the Y-axis beam, no complex setup is required to align two X-axis tracks and no substantial machine bed is required to maintain net alignment.

The weight of the tool provides the downward force of the tool on the workpiece that may be required for machining since the distal end of the beam will not be prevented from upward movement from being held on the track. However, we have found that this provides sufficient downwards force to enable the device of the present invention to machine a large number of workpieces. If necessary, additional weight can be added to the beam to prevent its distal end from moving upward as a result of the reaction between the workpiece and the tool.

The support at the distal end of the beam may simply be one or more wheels or rollers. The support is preferably height adjustable so that the beam can be maintained horizontal, irrespective of whether the support is running over a workpiece or over a surface supporting the workpiece. This height adjustment can be provided by an eccentrically mounted multi-faceted body secured at the distal end of the beam. The body can be rotated about the mounting to bring different facets into contact with the surface over which the slave support runs; the eccentric mounting can provide different distances between the surface and the Y-axis beam increasing or decreasing the distance between the Y-axis beam and the surface along which the support is running.

As mentioned above, the device of the present invention may be made so that it is portable. In such an arrangement, the Y-axis beam may be releasably connected to the first carriage, e.g. using a latch. The Z-axis beam may be similarly detachable if provided. However, the connection should maintain the beam at a known position relative to the first carriage and any connection can be used for this purpose. It is preferred that the connection comprises a projection on either the first carriage or the distal end of the beam and a corresponding recess is provided on the other of the first carriage and the beam so that the two parts can mate with one another to ensure that the beam is consistently located relative to the first carriage.

In order to provide power and control signals to drive the second carriage along the Y-axis beam and to control and power the tool, the two parts of the connection should provide power and optionally data signal connections as well.

As will be apparent, the movement of the first and second carriages and the operation of the tool will be under computer control from a central controller. The data control signals may be sent wirelessly or over wires to the carriages and the tool. If the data control signals are provided along wires, it is preferred that the controller is connected to the first carriage and control signals are provided to the second carriage and the tool via the connection between the first carriage and the beam.

Computer control of tools is well known and known computer CNC software may be used in the present invention to control the tool to shape the workpiece according to a design held in the computer controller.

The first axis along which the first carriage runs (X-axis), the axis along which the second carriage runs (Y-axis) and the vertical axis along which the tool is movable (Z-axis) are preferably orthogonal to each other, but there is no reason why that should necessarily be the case is different axes are more convenient.

### Brief Description of Drawings

There will now be described, by way of example only, a specific embodiment of the present invention by reference to the accompanying drawings in which:
Figure 1 is a perspective view of the computer-controlled multi-axis device of the present invention;
Figure 2 is a detailed view of a support at the end of a cantilevered beam of the apparatus of Figure 1;
Figure 3 (a) to (c) are three views of the support of Figure 2 in different configurations; and
Figure 4 is a view of the cantilevered arm of Figures 1 to 3 when removed from its carriage mount.
Figure 5 is a sectional view through the joint between the cantilevered arm and the associated carriage mount of Figure 4.

### Detailed Description of the Invention

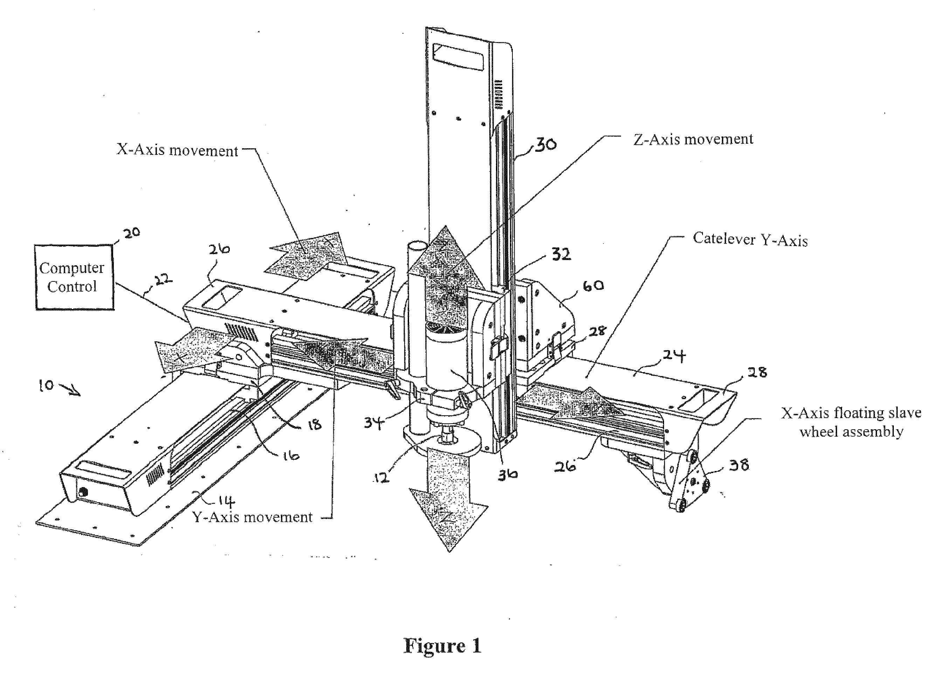

Referring initially to Figure 1, there is shown a computer-controlled device 10 for moving a tool 12 with respect to a workpiece (not shown but located underneath the tool 12). The device includes a base plate 14 that can be secured either to a bed (not shown) supporting the workpiece or to the workpiece itself via clamps, bolts or screws (not shown).

Mounted on the base plate 14 is a track 16 which extends in the direction of an X-axis, as shown by arrows X-X. Mounted on the track 16 is a first carriage 18 that can be driven along the track 16 by a motor (not shown) under the control of a computer 20 which is connected to the first carriage 18 by a lead, which is shown schematically by the reference number 22 but obviously the lead 22 must be able to maintain contact with the first carriage 18 along the full extent of the track 16. Instead of a wire, wireless communication may be provided between the computer 20 and the various parts of the device it controls. The software of the control computer 20 and the method of driving the first carriage 18 along the track 16 are well known in the art and will not be described further, except to say that any software and drive that is used in known CNC machines may be used in the context of the present invention.

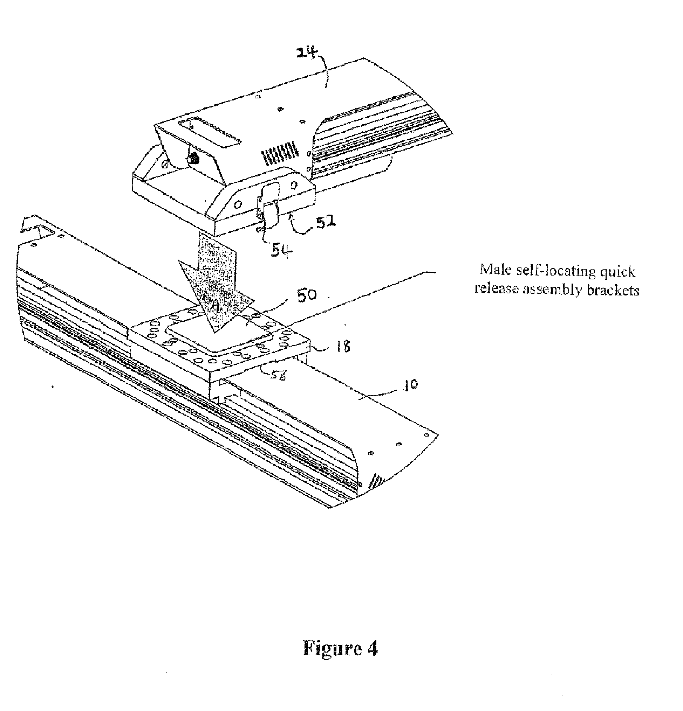

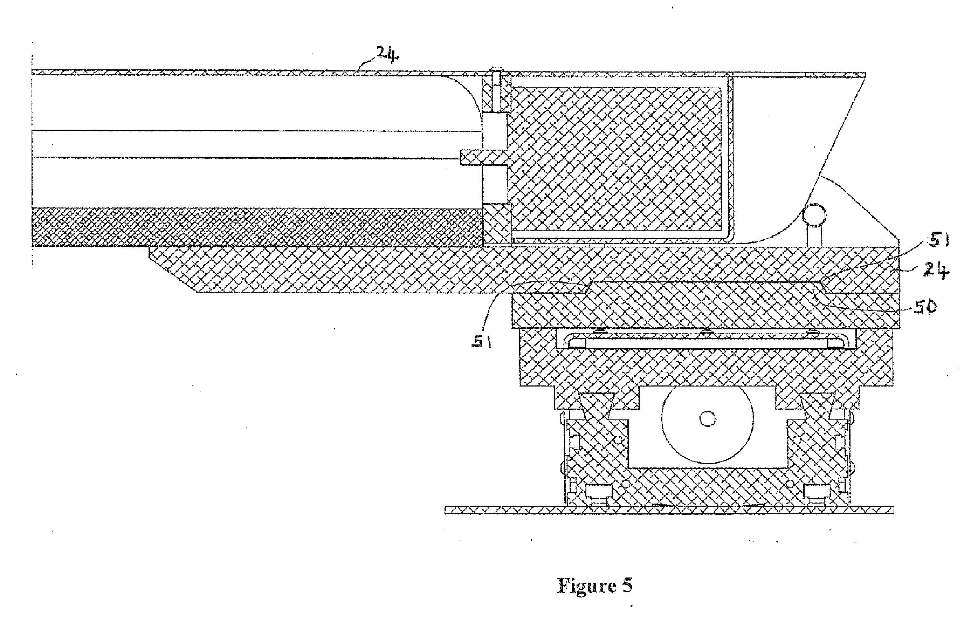

Mounted on the carriage 18 is a cantilevered beam 24 having a proximal end 26 which is attached to the first carriage 18 and a distal end 28. The connection between the first carriage and the cantilevered arm will be described in greater detail below in connection with Figures 4 and 5.

The cantilevered beam 24 defines a second track 26 which extends along a Y-axis. A second carriage 28 is mounted on the track 26 so that it can move in the direction of the Y-axis as shown by the arrows Y-Y- of Figure 1 under the control of computer 20. The power to the second carriage 28 is provided within the beam 24 and the drive and control of the second carriage is under the control of the computer 20 in a manner similar to that of the first carriage 18.

Mounted on the second carriage 28 is a third track 30 that extends along a Z-axis. Mounted on the third track 30 is a third carriage 32 that can be driven by a drive (not shown) along the third track in the direction shown by arrows Z-Z in Figure 1. Again, the drive of the carriage 32 and its movement are determined by the computer control 20 in the same way as with the first and second carriages. The third carriage 32 includes a bracket 34 for releasably mounting a tool 12, which is powered by a motor 36 under the control of the computer 20. Power to the tool is provided along the first, second and third beams.

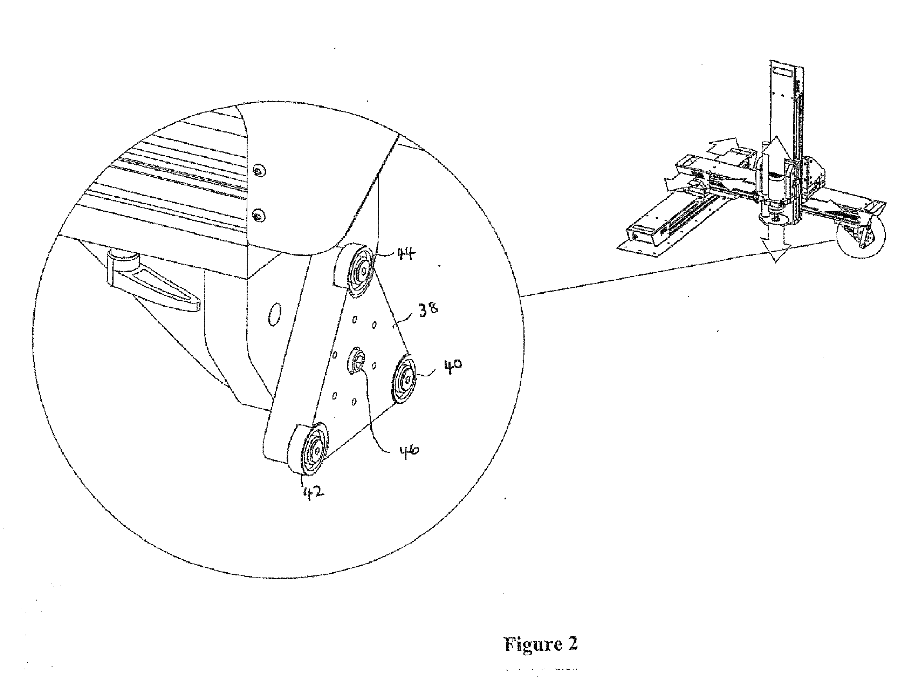

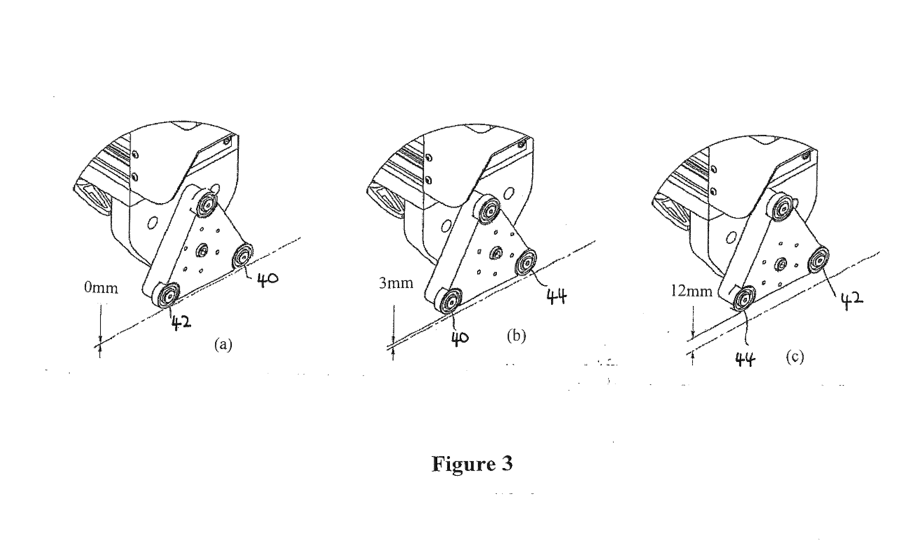

The distal end 28 of the beam 24 is supported by a multi-faceted slave wheel assembly 38, which is described in further detail in connection with Figures 2 and 3. The assembly 38 is not driven in any way and supports the distal end 28 of the beam 24 at a desired level, preferably to maintain it horizontal. The assembly 38 is in turn be supported on a base surface provided either by the workpiece itself or by a bed that itself supports the workpiece.

Turning now to Figures 2 and 3 which show the support assembly 38 in greater detail. This support assembly is of generally triangular prismatic shape and includes three wheels 40, 42 and 44 at each of its corners so that two of the wheels are always engaged with the base surface on which the support body 38 runs. The prismatic assembly 38 is secured to the distal end of the beam 24 by means of a bolt 46 about which the support assembly 38 is pivotable to bring different pairs of wheels, 40, 42, 44 into engagement with the base surface. The bolt 46 is eccentrically mounted in the support assembly 38 so that, when different pairs of wheels 40, 42 and 44 engage the base surface, the height of the distal end of the beam 24 above the base surface can be selected by choosing the appropriate pair of wheels to engage the base surface.

Thus, in Figure 3(a), wheels 40 and 42 engage the base surface. With this arrangement, the height of the wheels 40, 42 is the same of that of the base plate 14. This arrangement is used when the support assembly 38 and the base plate 14 both lie in the same plane.

In Figure 3(b), the support 38 has been rotated to bring wheels 40 and 44 into engagement with the base surface. Such an arrangement elevates the distal end 28 of the beam by a smaller distance than is the case in Figure 3(a) and the height difference is, as shown, 3mm. Such an arrangement can be used, for example, when the base plate 44 rests on a bed and the support 38 rests on a workpiece that is 3mm thick. In this way, the beam 24 is maintained horizontal.

The arrangement in Figure 3(c) is similar to the arrangement in Figure 3(b) except that now wheels 14 and 42 engage the base surface which accommodates a height difference of 12mm between the height of the wheels and the base plate 14.

The reason for choosing the distances of 3mm and 12mm is to cut acrylic sheet, which is often found in thicknesses of 3mm and MDF/plyboard, which is often found in a thickness of 12mm. Obviously, if cutting materials of other thicknesses, different heights can be set. It should be noted that the support assembly 38 can be replaced by a different support assembly giving different heights. Furthermore, instead of having the prismatic support shown in Figure 38 other arrangements for varying the height of the distal end 28 above the base surface may be used instead. The advantage of the prismatic support 38 is that the height can quickly and easily be set which is particularly useful when the thickness of the workpiece is known.

Turning now to consider the connection between the first carriage 18 and the beam 24, reference is made to Figures 4 and 5. These Figures show the track 10 and the first carriage 18 which is moveable along the track 10 under the control of the computer 20. The top surface of the carriage 18 includes a male projection 50 which is generally square in cross section, although other non-circular-symmetric shapes may be used. The underside 52 of the beam 24 has a recess 51 corresponding in shape to the projection 50 so that, when the beam 24 is mounted on the first carriage 18 as shown by arrow A of Figure 4, the projection 50 mates with the recess 51 in surface 52 to ensure that the beam is always at an angle of 90° to the axis of the track 10. In this way, the X-axis defined by the track 10 is always orthogonal to the Y-axis defined by the length of the beam 24. The beam 24 is secured on the first carriage 18 by means of a releasable latch 54 that engages in a corresponding groove 56 on the underside of the carriage 18. Although Figure 4 only shows one latch, a further latch is provided on the other side of the beam and further latches can be provided as required.

The interface between the underside 52 of the beam 24 and the top surface of the carriage may include electrical connections (not shown) for providing power and control signals from the computer 20 via the first carriage 18 to the beam 24. These electrical connections may be mere contact pads or may be plug and socket arrangements.

The arrangement for connecting the beam 30 to the second carriage 28 is similar to the arrangement shown in Figure 4. In particular, the beam 30 is supported on a bracket 60 that is connected to the first carriage 28 in the same way as the beam 24 is connected to the first carriage 18. In a similar way, power and control signals can be transmitted from the second carriage 28 to the beam 30.

Finally, a similar arrangement can be used for connecting the tool bracket 34 (and accordingly the tool 12) to the third carriage 32 which is moveable along the Z-axis beam 30. Again, power and control signals can be provided through such a connection.

Instead of providing control signals through the various connections described above, they can be provided wirelessly directly from the computer 20.

## Claims

1. A computer-controlled multi-axis device for moving a tool with respect to a workpiece, which device comprises:
a first track defining a first axis,
a first carriage that is derivable along the first track,
a beam that defines a second track extending along a second axis, wherein the beam has a proximal end and a distal end and is supported at its proximal end by the first carriage, such that the beam is moved by the first carriage,
a second carriage that is drivable along the second track and that is capable of carrying a tool, and
a movable support configured to support the distal end of the beam and that is moved by the beam, so that the beam is supported above the workpiece at is proximal end by the first carriage and at its distal end by the movable support.

2. A device as claimed in claim 1 wherein the support at the distal end of the beam comprises at least one rolling device, e.g. a wheel or roller, for engaging a base on which the distal end of the beam is supported.

3. A device as claimed in claim 1 or claim 2, wherein the support is height adjustable to support the beam at different heights.

4. A device as claimed in claim 3, wherein the support comprises a body that can be fixed at the distal end of the beam in more than one configuration, the different configurations supporting the beam at different heights.

5. A device as claimed in claim 4, wherein the body is multi-faceted and configured such that the body and the beam can be supported on a selected one of said facets.

6. A device as claimed in claim 5, wherein the multi-faceted body is eccentrically fixed at the distal end of the beam whereby fixing the body in its different configurations supports the beam at different heights.

7. A device as claimed in any preceding claim wherein the beam is supported by the first carriage at its proximal end by a connection that comprises a projection on one of the carriage and the beam and a correspondingly shaped mating recess in the other.

8. A device as claimed in claim 7 wherein the connection comprises a latch for releasably connecting the beam to the carriage.

9. A device as claimed in claim 7 or claim 8 wherein the connection comprises electrical connectors for transmitting power to the second carriage for controlling the movement of the second carriage and the tool.

10. A device as claimed in any preceding claim which includes a controller for providing control signals controlling the movement of the first and second carriages and optionally also the tool, which control signals may be transmitted wirelessly or via wires.

11. A device as claimed in any preceding claim wherein second carriage includes a mount for the tool and wherein the tool mount is movable relative to the second carriage along a third axis.

12. A device as claimed in any preceding claim which includes a tool supported on the second carriage.

13. A device as claimed in claim 10 or claim 11, wherein the tool is a cutting, routing, reaming, surface treating or marking tool.

14. A device as claimed in any preceding claim wherein said axes are orthogonal to each other.

15. A kit that can be assembled into the device as claimed in any preceding claim wherein the beam is connectable to, but not connected to, the first carriage.
